# DEMANDE DE BREVET EUROPEEN

(11) **EP 2 954 767 A1**
(43) Date de publication de la demande: **16.12.2015**
(21) Numéro de dépôt: 15305885.4
(22) Date de dépôt: 10.06.2015
(51) Int. Cl.: A01B 49/06, A01B 69/00, A01C 7/06

(54) **SEMOIR COMPORTANT DES OUTILS OUVREURS ET DES OUTILS SEMEURS AVEC UN CHÂSSIS PERFECTIONNÉ**

(30) Priorité: 11.06.2014 FR 1455289
(71) Demandeur: Kuhn SA (Societe Anonyme), 67700 Saverne (FR)
(72) Inventeur: Potier, Philippe, 67290 Zittersheim (FR); Viriat, Laurent, 67440 Westhouse-Marmoutier (FR); Andres, Christophe, 67700 Waldolwisheim (FR)
(74) Mandataire: Nuss, Laurent

(57) **Abrégé**

La présente invention concerne un semoir (1) comportant un châssis (2) composé d'une poutre avant (5) supportant des outils ouvreurs (6) et d'une poutre arrière (7) supportant des outils semeurs (8), les outils semeurs (8) s'étendent derrière les outils ouvreurs (6), chaque outil ouvreur (6) comporte un dispositif pour la fertilisation.

Le semoir (1) est remarquable en ce que la poutre arrière (7) est liée au châssis (2) par l'intermédiaire d'un parallélogramme déformable (11) transversalement à la direction d'avance (A), le parallélogramme déformable (11) comporte au moins deux bras articulés (12, 13) et un élément de verrouillage (14) prévu entre deux côtés consécutifs du parallélogramme déformable (11).

## Description

La présente invention se rapporte au domaine technique général du machinisme agricole.

L'invention concerne plus particulièrement, et comme indiqué dans le préambule de la revendication 1, un semoir comportant un châssis roulant portant au moins une poutre avant supportant des outils ouvreurs et une poutre arrière supportant des outils semeurs, semoir dans lequel les outils semeurs s'étendent derrière les outils ouvreurs, vus selon la direction d'avance, dans lequel à chaque outil ouvreur est associé opérationnellement à un ou deux outil(s) semeur(s) et dans lequel chaque outil ouvreur comporte ou est associé à un dispositif pour la fertilisation.

De telles machines de semis combinées capable de distribuer simultanément des semences et de l'engrais (généralement de l'engrais en granulés) sont connues en particulier du document US 3 701 327.

Il est bien connu que les éléments nécessaires au développement d'une plante viennent de l'air et du sol. Pour obtenir de bons rendements, il faut donc fournir aux cultures les éléments nutritifs dont le sol n'est pas suffisamment pourvu. L'apport d'engrais permet d'augmenter les rendements puisque les plantes poussent mieux.

Différents modes de placement de l'engrais par rapport à la semence existent, parmi lesquels deux techniques principales.

Une première technique consiste à positionner l'engrais plus profondément que la semence, entre deux lignes de semis. Ainsi la distribution d'engrais n'intervient qu'un rang sur deux, il n'y a pas de risque de contact entre l'engrais et la semence. Une telle localisation de l'engrais est favorable au développement de l'appareil radiculaire fasciculé des céréales telles que le blé.

Une autre technique de localisation d'engrais, illustrée par le document US précité, consiste à déposer l'engrais sous chaque ligne de semis. Cette technique est appropriée pour les plantes avec un appareil radiculaire pivotant : le colza possède une telle racine pivotante. La racine principale verticale de ces plantes est plus développée que les radicelles qu'elle porte.

Dans la plupart des exploitations agricoles, les deux espèces à appareil radiculaire différent sont cultivées. Elles sont implantées avec un seul semoir en lignes dont l'écartement entre les rangs est relativement étroit.

La fertilisation peut être réalisée en même temps que le semis (voir US 3 701 327). Une telle position de l'engrais favorise le développement du faisceau de racines des céréales (à appareil radiculaire fasciculé), l'engrais ne se trouvant pas très éloigné de la semence lorsqu'il est distribué entre les rangs. Par contre, cette position entre les rangs de l'engrais ne favorise pas le développement de la racine principale du plant de colza par exemple (à appareil radiculaire pivotant). Il est courant de boucher l'alimentation en graines d'un rang sur deux pour les semis de colza de manière à augmenter l'écartement entre les rangs.

Par le document US 3 454 285, on connaît, par ailleurs, une machine combinée cultivateur/semoir dans laquelle le semoir est solidaire d'un châssis roulant relié par une structure de parallélogramme déformable au cultivateur accroché à un tracteur.

Le parallélogramme, dont la déformation peut être commandée, est destiné à compenser la dérive du semoir lors d'un déplacement sur une pente ou à flanc de colline. Dans ce cas, et bien que le semoir soit incliné par rapport à la direction d'avance, les organes semeurs peuvent suivre le trajet des rangs prédéfinis.

La présente invention a pour but de remédier aux inconvénients précités. Elle doit notamment proposer une machine combinée de semis et de distribution d'engrais qui s'adapte aisément à l'espèce semée avec une localisation sélective contrôlée de l'engrais par rapport au semis pour favoriser le développement de la plante concernée et qui préférentiellement permet de conserver une utilisation optimale des moyens semeurs.

A cet effet, l'invention concerne un semoir, sous forme de machine combinée du type évoqué en introduction à la présente, caractérisé en ce que la poutre arrière est liée au châssis roulant porteur par l'intermédiaire d'une structure en parallélogramme déformable transversalement à la direction d'avance, en ce que ce parallélogramme déformable comporte au moins deux bras articulés et en ce qu'un élément de verrouillage est prévu entre deux côtés consécutifs dudit parallélogramme déformable pour verrouiller ledit parallélogramme dans au moins deux configurations différentes, dont l'une au moins correspond à un positionnement mutuellement aligné entre les outils ouvreurs et les outils semeurs qui leur sont respectivement associés.

L'autre ou les autres configuration(s) du parallélogramme correspond(ent) à un positionnement décalé latéralement (par rapport à la direction d'avance) entre les outils ouvreurs et les outils semeurs.

Ainsi, dans la configuration avec alignement, l'engrais est déposé à proximité immédiate (normalement directement en-dessous) des lignes de semis, alors que dans la configuration avec décalage latéral, l'engrais est déposé plus ou moins à distance des lignes de semis, par exemple entre deux rangs de semis parallèles voisins, éventuellement à mi-distance.

En accord avec une caractéristique importante de l'invention, ladite au moins une poutre avant et ladite poutre arrière sont arrangées parallèlement entre elles et perpendiculairement à la direction d'avance ou à un plan vertical médian du châssis roulant porteur. Une déformation ou un changement de configuration du parallélogramme entraîne alors avantageusement un déplacement relatif entre les poutres avant et arrière selon une direction transversale au plan ou à la direction précités, avec conservation du parallélisme entre lesdites poutres et conservation de leur orientation perpendiculaire à la direction d'avance et au plan vertical médian.

Grâce au montage de la poutre arrière sur un parallélogramme déformable latéralement, chaque outil semeur reste parallèle à la direction d'avance en toutes positions. Les outils semeurs sont donc toujours placés dans une position adéquate, c'est-à-dire parallèle à la direction d'avance quel que soit le réglage. Le décalage latéral de la poutre arrière portant les outils semeurs permet donc de déposer la semence à proximité ou en décalé de l'engrais.

D'autres caractéristiques et avantages de l'invention se dégageront de la description qui va suivre en regard des dessins annexés qui ne sont donnés qu'à titre d'exemples non limitatifs de l'invention. Sur ces dessins :
- la figure 1 représente une vue latérale d'un semoir, selon un premier mode de réalisation de la présente invention dans une configuration de travail, attelé à un tracteur,
- la figure 2 représente une vue de dessus partielle du semoir dans une première configuration,
- la figure 3 représente une vue de dessus partielle d'un semoir selon un autre mode de réalisation dans une deuxième configuration,
- la figure 4 représente une vue de dessus partielle du semoir représenté figure 3, en accord avec une autre variante de réalisation.

Les figures annexées montrent un semoir (1) comportant un châssis (2) roulant portant au moins une poutre avant (5) supportant des outils ouvreurs (6) et une poutre arrière (7) supportant des outils semeurs (8), semoir (1) dans lequel les outils semeurs (8) s'étendent derrière les outils ouvreurs (6), vus selon la direction d'avance (A), dans lequel à chaque outil ouvreur (6) est associé opérationnellement un ou deux outil(s) semeur(s) (8) et dans lequel chaque outil ouvreur (6) comporte un dispositif pour la fertilisation.

Conformément à l'invention, la poutre arrière (7) est liée au châssis roulant porteur (2) par l'intermédiaire d'une structure en parallélogramme (11) déformable transversalement à la direction d'avance (A). Ce parallélogramme déformable (11) comporte au moins deux bras articulés (12, 13) et un élément de verrouillage (14) est prévu entre deux côtés consécutifs dudit parallélogramme déformable (11) pour verrouiller ledit parallélogramme (11) dans au moins deux configurations différentes, dont l'une au moins correspond à un positionnement mutuellement aligné entre les outils ouvreurs (6) et les outils semeurs (8) qui leur sont respectivement associés.

En accord avec des caractéristiques constructives avantageuses de l'invention, ladite au moins une poutre avant (5) et ladite poutre arrière (6) sont arrangées parallèlement entre elles et perpendiculairement à la direction d'avance (A) ou à un plan vertical médian (18) du châssis roulant porteur (2). De plus, une déformation ou un changement de configuration du parallélogramme (11) entraîne un déplacement relatif entre les poutres avant et arrière (5 et 7) selon une direction transversale au plan (18) ou à la direction (A) précités, avec conservation du parallélisme entre lesdites poutres (5 et 7) et conservation de leur orientation perpendiculaire à la direction d'avance (A) et au plan vertical médian (18).

Préférentiellement, la construction de la structure en forme de parallélogramme est telle que lesdits au moins deux bras articulés (12, 13) sont disposés symétriquement de part et d'autre du plan vertical médian (18) du semoir (1), dans la configuration du parallélogramme déformable (11) correspondant à un alignement entre outils ouvreurs (6) et outils semeurs (8) correspondants.

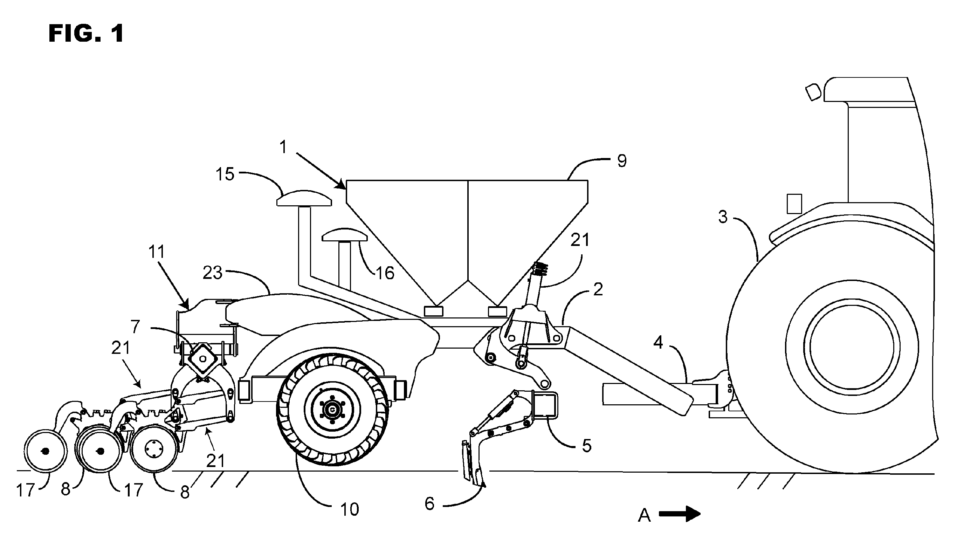

Des caractéristiques additionnelles, ainsi que des variantes constructives supplémentaires du semoir (1) selon l'invention sont évoquées ci-après, de manière non limitative, en relation avec les figures 1 à 4 annexées.

La figure 1 représente, en vue de côté, une machine de distribution telle qu'un semoir (1) conforme à l'invention. Ce semoir (1) est tracté suivant une direction d'avance indiquée par la flèche (A) lors du travail et lors du transport. Dans la suite de la description, les notions suivantes "avant" et "arrière", "devant" et "derrière" sont définies par rapport à la direction d'avance (A). Le semoir (1) comporte un châssis (2) lié à l'arrière d'un tracteur (3) au moyen d'un timon d'attelage (4). Un tel semoir (1) comporte un châssis (2) composé d'une poutre avant (5) supportant des outils ouvreurs (6) et d'une poutre arrière (7) supportant des outils semeurs (8). Les outils semeurs (8) s'étendent derrière les outils ouvreurs (6). Les outils ouvreurs (6) ainsi que les outils semeurs (8) sont répartis de manière au moins sensiblement uniforme sur toute la largeur de travail du semoir (1). Le châssis (2) porte également une trémie (9) et est appuyé sur le sol au moyen de roues (10). Les roues (10) s'étendent entre les outils ouvreurs (6) et les outils semeurs (8).

Le semoir (1) réalise le semis et l'apport d'engrais en un seul passage. Ainsi, l'apport d'engrais se fait simultanément au semis. Les outils semeurs (8) déposent la semence dans le sol et les outils ouvreurs (6) déposent l'engrais. Chaque outil ouvreur (6) est équipé d'un enfouisseur pour déposer la dose d'engrais et favoriser le développement des futures plantes. Le semoir (1) de l'invention permet de placer l'engrais sous la surface du sol dans une partie précise du sol au moment du semis. La trémie (9) comporte à cet effet une paroi de séparation permettant de la diviser en deux parties distinctes. Dans une alternative, la trémie (9) est constituée de deux réservoirs distincts. La distribution de la semence et la distribution de l'engrais sont pneumatiques. Le produit est dosé en sortie de trémie (9) et est acheminé vers une tête de répartition (15, 16) pour être répartis entre les outils (6, 8). Des tuyaux (non représentés) raccordent les outils (6, 8) à la tête de répartition (15, 16). Les outils semeurs (8) fabriquent un sillon à une profondeur déterminée pour y placer la graine et la recouvrir. De préférence, chaque outil semeur (8) est lié à la poutre arrière (7) au moyen d'un système à parallélogramme (21). L'outil semeur (8) est suivi d'une roue de contrôle (17) pour le contrôle de la profondeur. Le semoir (1) peut également être équipé d'une herse de recouvrement (non représentée) qui s'étend derrière les outils semeurs (8). La position de la trémie (9) à l'avant du châssis (2) est favorable d'une part pour la répartition des charges et d'autre part pour mettre du poids sur les outils ouvreurs (6).

Les outils ouvreurs (6) sont disposés devant les outils semeurs (8), ils sont répartis sur toute la largeur du semoir (1). Ils sont arrangés suivant au moins une rangée perpendiculaire à la direction d'avance (A). La poutre avant (5) et la poutre arrière (7) sont disposées transversalement par rapport à la direction d'avance (A), elles sont parallèles l'une par rapport à l'autre. Les outils ouvreurs (6) comme les outils semeurs (8) passent d'une position de travail, comme représenté sur la figure 1, à une position éloignée du sol, et inversement, au moyen d'au moins un actionneur. L'actionneur (21) pour relever les outils ouvreurs (6) est représenté sur la figure 1. Lors du transport et des manoeuvres, les outils ouvreurs (6) et les outils semeurs (8) sont éloignés du sol et rapprochés du châssis (2) par un actionneur respectif. Les actionneurs peuvent être commandés séparément.

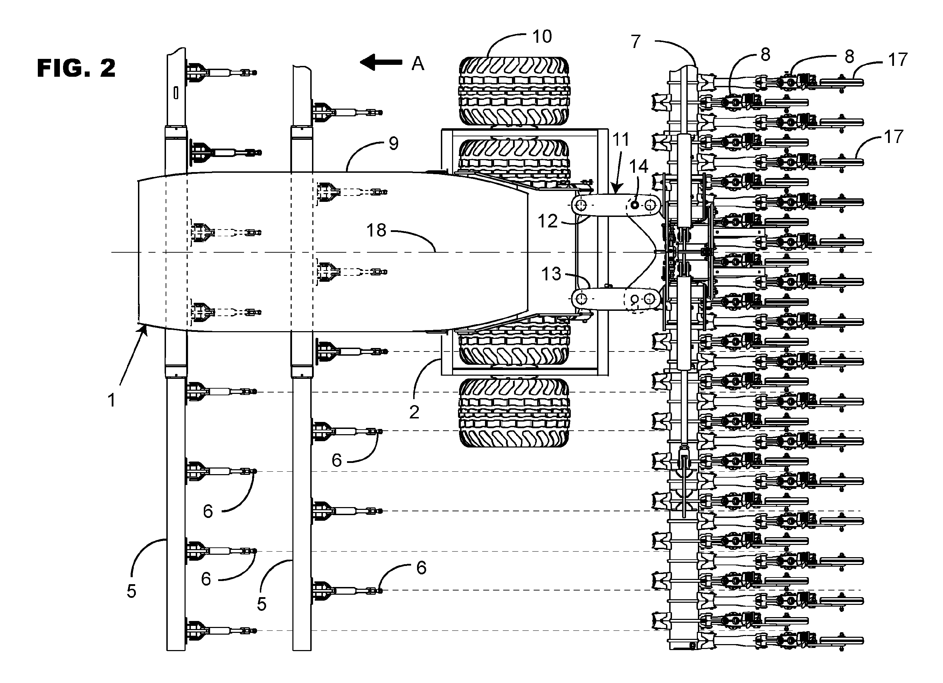

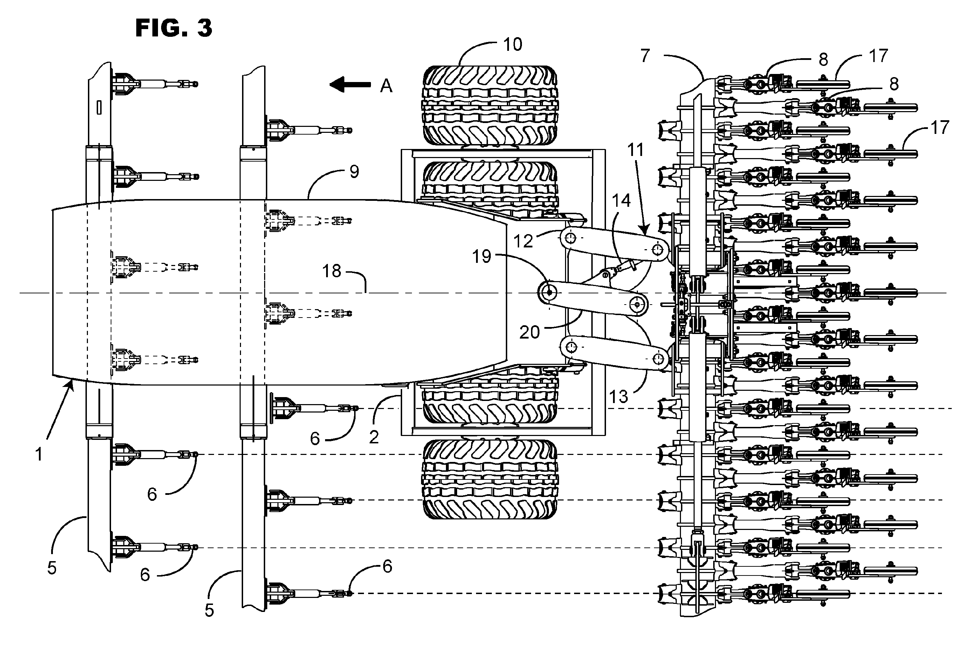

Tel que représenté sur la figure 1, l'outil ouvreur (6) est une dent qui ouvre un sillon pour y placer l'engrais. L'outil semeur (8) est réalisé sous la forme d'au moins un disque semeur. Selon les figures 2 et 3, les outils semeurs (8) sont constitués de deux disques disposés en V qui ouvrent le sillon dans lequel est déposée la graine. De manière générale, l'engrais est déposé plus profondément que la semence.

La figure 2 représente une vue de dessus d'un semoir (1) selon l'invention. Ce semoir (1) comporte des outils ouvreurs (6) arrangés suivant au moins une rangée perpendiculaire à la direction d'avance (A). Sur cet exemple, les outils ouvreurs (6) sont répartis selon deux rangées pour limiter les risques de bourrage. Les outils semeurs (8) sont également répartis suivant deux rangées.

Selon une importante caractéristique de l'invention, la poutre arrière (7) est liée au châssis (2) par l'intermédiaire d'un parallélogramme déformable (11) transversalement à la direction d'avance (A), le parallélogramme déformable (11) comporte au moins deux bras articulés (12, 13), s'étendant préférentiellement dans un même plan perpendiculaire au plan médian vertical (18), et un élément de verrouillage (14) prévu entre deux côtés consécutifs du parallélogramme déformable (11). L'élément de verrouillage (14) permet de bloquer le parallélogramme déformable (11) dans au moins deux positions, par exemple en solidarisant l'un des bras articulé (12, 13) avec le châssis roulant (2) ou avec la poutre arrière (7). Dans une première variante, l'élément de verrouillage (14) peut ainsi se présenter sous la forme d'une goupille ou d'un goujon traversant l'un des bras (12, 13), ainsi qu'une chape solidaire du châssis (2) ou de la poutre (7). Dans une alternative, l'élément de verrouillage (14) permet également de déplacer la poutre arrière (7) transversalement compte tenu de la direction d'avance (A). La liaison à parallélogramme déformable (11) assure donc un déplacement latéral de la poutre arrière (7). Un tel déplacement permet aux outils semeurs (8) de toujours rester parallèles à la direction d'avance (A) afin d'éviter une usure prématurée.

La figure 2 représente le semoir (1) dans une première configuration. Les outils ouvreurs (6) sont montés pour s'étendre entre les outils semeurs (8) dans le but de déposer l'engrais entre deux lignes de semis. Les lignes de passage des outils ouvreurs (6) sont représentées en traits discontinus. Dans cette première configuration, les bras articulés (12, 13) du parallélogramme déformable (11) sont sensiblement parallèle à la direction d'avance (A). L'élément de verrouillage (14) est inséré au travers du bras articulé droit (12) et du support de la poutre arrière (7). Ce réglage est adapté aux semis de céréales dont l'appareil radiculaire est fasciculé. En effet, la dépose de l'engrais entre les lignes de semis permet de développer le réseau de racines des céréales telles que le blé ou l'orge. Le semoir (1) est placé dans une deuxième configuration pour le semis d'espèces à appareil radiculaire pivotant. Dans cette deuxième configuration, la rangée avant des éléments semeurs (8) est alignée avec les outils ouvreurs (6). Pour cela, la poutre arrière (7) du semoir (1) est déplacée latéralement vers la gauche par rapport à la représentation de la figure 2. Lorsque la poutre arrière (7) est placée dans une deuxième configuration, l'élément de verrouillage (14) est inséré au travers du bras articulé gauche (13).

D'une manière particulièrement avantageuse, lesdits au moins deux bras articulés (12, 13) sont disposés symétriquement de part et d'autre du plan vertical médian (18) du semoir (1). Deux au moins desdits bras articulés (12, 13) s'étendent dans un même plan horizontal. Le parallélogramme déformable (11) s'étend horizontalement. Les bras articulés (12, 13) sont liés d'une part au châssis (2) et d'autre part à la poutre arrière (7) au moyen d'une articulation respective, avantageusement sous la forme de liaisons à pivot à axes verticaux. Ces articulations sont avantageusement du type pivot dont les axes respectifs sont sensiblement parallèles entre eux.

La figure 3 représente une vue de dessus d'un semoir (1) selon un autre exemple de réalisation. Ce semoir (1) est représenté selon la deuxième configuration. Les outils ouvreurs (6) sont alignés avec les outils semeurs (8) pour déposer l'engrais dans la ligne de semis. Cet alignement est représenté au moyen des lignes en traits discontinus sur la figure 3. Dans cette deuxième configuration, les bras articulés (12, 13) du parallélogramme déformable (11) ne sont pas parallèles à la direction d'avance (A). Les bras articulés (12, 13) sont déplacés vers la gauche et verrouillés dans cette position par l'intermédiaire de l'élément de verrouillage (14). Le déplacement latéral correspondant à maximum la moitié de l'écartement entre deux outils semeurs (8) voisins. Cette deuxième configuration est utilisée pour les semis d'espèces dont l'appareil radiculaire est pivotant comme par exemple le colza. D'une manière avantageuse, l'engrais est alors placé en dessous de la semence pour favoriser le développement de la racine principale verticale.

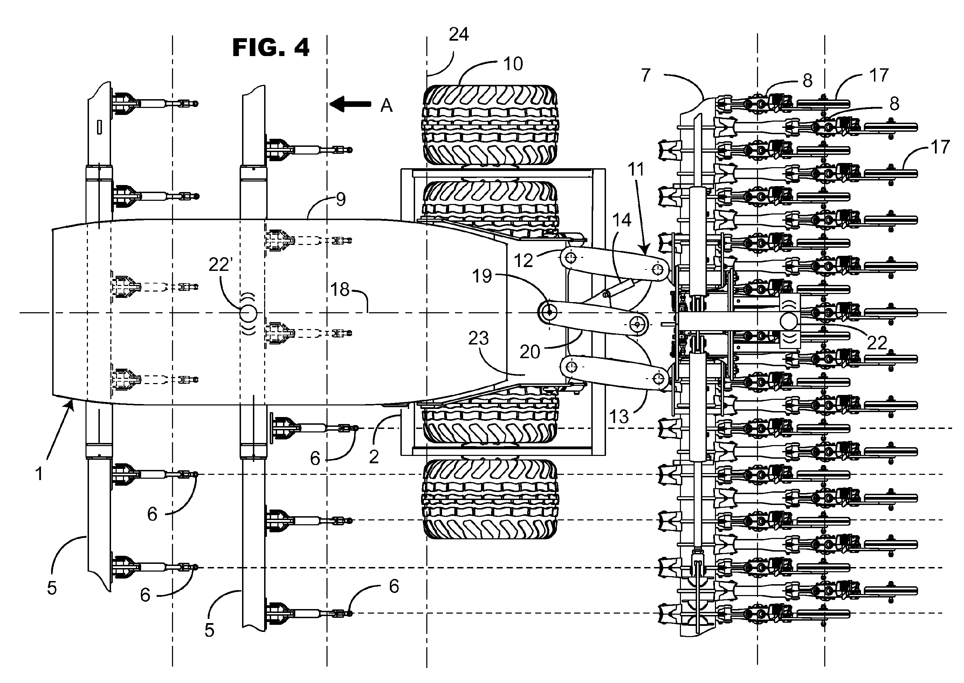

Dans un exemple de réalisation représenté à la figure 4, l'élément de verrouillage (14) consiste en un organe du type stabilisateur, préférentiellement ajustable ou un actionneur analogue, apte et destiné à réaliser le réglage du déplacement latéral de la poutre arrière (7) par déformation du parallélogramme (11), ce avec faculté de verrouillage de la déformation du parallélogramme (11) dans une configuration donnée, prédéterminée ou non. Par conséquent, dans cette variante, l'élément de verrouillage (14) remplit une fonction double consistant, d'une part à déplacer le parallélogramme déformable (11) et d'autre part à verrouiller la position de la poutre arrière (7).

Le stabilisateur (14) peut, par exemple, être disposé entre le bras articulé droit (12) et le support de la poutre arrière (7).

Selon une autre caractéristique de l'invention ressortant également de la figure 4, il peut être prévu que le semoir (1) comporte un système de géolocalisation absolue ou relative, au moins de la poutre arrière (7), avec au moins une antenne (22, 22'), par exemple du type GPS.

En accord avec une première variante constructive, le système de géolocalisation comprend une première antenne (22) associée à la poutre arrière (7) et une seconde antenne (22') associée à l'une des poutres avant (5) ou au châssis roulant (2), l'information fournie par ledit système étant exploitée pour positionner ladite poutre arrière (7) latéralement par rapport à la ou une poutre avant (5), de manière continue ou non, par pilotage d'un actionneur (14) formant élément de verrouillage et qui est apte et destiné à contrôler la déformation du parallélogramme (11).

En accord avec une seconde variante constructive, le système de géolocalisation comprend une unique antenne (22) fixée sur le châssis (2), sur la ou une poutre avant (5) ou encore sur la poutre arrière (7) et en ce que le semoir (1) comprend également un moyen de mesure de la déformation du parallélogramme (11), par le biais d'une mesure angulaire au niveau de l'une des liaisons articulées de l'un des bras (12, 13) ou d'une mesure de longueur au niveau d'un actionneur linéaire (14) formant organe de verrouillage et qui est apte et destiné à contrôler la déformation dudit parallélogramme (11).

Grâce à ladite au moins une antenne (22) fixée sur la poutre arrière (7), cette dernière pourra être positionnée exactement par rapport à la poutre avant (5). De préférence, le semoir (1) est équipé d'une antenne placée sur le châssis (2) et d'une antenne placée sur la poutre arrière (7). Ainsi, la position des outils semeurs (8) pourra être très précise par rapport aux outils ouvreurs (6). Le décalage latéral via le parallélogramme déformable (11) se fera de manière précise. Lorsque le semoir (1) doit travailler sur un terrain en dévers, le parallélogramme déformable (11) pourra ainsi être piloté pour repositionner la poutre arrière (7) pour obtenir un alignement ou un décalage des outils semeurs (8) avec les outils ouvreurs (6). Ce système de géolocalisation est aussi utile dans les semis en courbes ou en légères courbes.

Le semoir (1) selon l'autre mode de réalisation, représenté à la figure 3, comporte une articulation centrale (19) d'axe sensiblement vertical qui s'étend dans le plan vertical médian (18). Grâce à cette articulation centrale (19), les outils semeurs (8) passent exactement dans le sillon formé par les outils ouvreurs (6) dans les virages. Les outils ouvreurs (6) et les outils semeurs (8) sont montés selon deux rangées. Les lignes de référence à prendre en compte dans ce cas sont respectivement le milieu entre le point de contact au sol des outils ouvreurs (6) et des outils semeurs (8). Cette articulation centrale (19) est reliée à la poutre arrière (7) au moyen d'une bielle centrale (20), laquelle est reliée de manière articulée à ladite poutre (7). La bielle centrale (20) est parallèle à l'un au moins des bras articulés (12, 13). D'une manière avantageuse, le parallélogramme déformable (11) est constitué d'un premier et d'un deuxième parallélogrammes élémentaires. Le premier parallélogramme élémentaire est formé par l'un des bras articulés (12 ; 13) et la bielle centrale (20) et le deuxième parallélogramme élémentaire est formé par l'autre bras articulé (13 ; 12) et la bielle centrale (20). Le semoir (1) est verrouillé dans sa deuxième configuration avec un élément de verrouillage (14) tel qu'un stabilisateur. L'élément de verrouillage (14) est placé entre la bielle centrale (20) et la poutre arrière (7). Le stabilisateur est avantageusement ajustable, il permet le réglage du déplacement latéral de la poutre arrière (7).

Il est tout à fait possible de prévoir au moins une troisième position de réglage pour le parallélogramme déformable (11) de manière à positionner les outils semeurs (8) différemment par rapport aux outils ouvreurs (6).

Il est également possible de prévoir une déformation du parallélogramme (11) qui est contrôlée de manière continue par l'élément de verrouillage (14) sous forme d'actionneur ou de stabilisateur, ladite déformation s'adaptant en permanence aux informations de positionnement de la poutre arrière (7) par rapport à une valeur de consigne prédéterminée, calculée ou mesurée.

Dans une variante non représentée, la longueur des bras articulés (12, 13) est ajustable. Le bras articulé (12, 13) est réalisé par un vérin hydraulique. La longueur est uniquement adaptable lors du travail lorsque les outils semeurs (8) sont en terre. Si la longueur d'un bras articulé augmente, celle de l'autre bras articulé diminue. Pour le transport et les manoeuvres en fin de champ, la longueur des bras articulés (12, 13) est fixe. Ces bras articulés (12, 13) de longueur réglable assurent que les outils semeurs (8) passent dans le sillon, ou au plus près du sillon formé par l'outil ouvreur (6) correspondant.

Comme le montrent également les figures 2 à 4, il est avantageusement prévu qu'à chaque outil ouvreur (6) correspondent deux outils semeurs (8), décalés latéralement l'un par rapport à l'autre, une disposition des bras articulés (12, 13) parallèlement à la direction d'avance (A) ou au plan médian (18) correspondant à un alignement de chaque outil ouvreur (6) à mi-distance entre deux outils semeurs (8) qui lui sont associés.

Préférentiellement, les outils ouvreurs (6), vus selon une direction perpendiculaire à la direction d'avance (A) ou au plan médian (18), sont arrangés alternativement sur deux rangées (formant deux alignements transversaux), décalées l'une par rapport à l'autre dans la direction d'avance (A), les outils ouvreurs (6) étant préférentiellement montés chacun sur une poutre avant (5) propre.

Préférentiellement, les outils semeurs (8), vus selon une direction perpendiculaire à la direction d'avance (A) ou au plan médian (18), sont arrangés alternativement sur deux rangées (formant deux alignements transversaux), décalées l'une par rapport à l'autre dans la direction d'avance (A), lesdits outils semeurs (8) étant préférentiellement montés sur une même poutre arrière (7).

Dans les deux variantes préférées mentionnées ci-dessus, lorsqu'un système de géolocalisation est également prévu, le montage de l'antenne (22) (ou première antenne) associée aux outils semeurs (8) est tel que ladite antenne (22) se trouve placée à égale distance entre les rangées avant et arrière d'outils semeurs (8), comme illustré sur la figure 4.

En cas de présence d'une seconde antenne (22') associée aux outils ouvreurs (6), le montage de celle-ci sera tel que ladite antenne (22') se trouve placée à égale distance entre les rangées avant et arrière d'outils ouvreurs (6), comme illustré sur la figure 4.

Comme le montre également la figure 4, le montage des antennes (22, 22') est préférentiellement sensiblement centré par rapport au plan (18) ou à la direction d'avance (A).

Selon une caractéristique constructive additionnelle, les outils semeurs (8) comprennent chacun un moyen (17) de contrôle de la profondeur du sillon creusé, par exemple sous la forme d'une roue suiveuse, et lesdits outils semeurs (8) sont chacun fixés sur la poutre arrière (7), ensemble avec le moyen (17) de contrôle de profondeur respectivement associé, par l'intermédiaire d'un système librement déformable à structure en parallélogramme (21), s'étendant chacun dans un plan vertical parallèle au plan médian (18).

Enfin, comme le montre la figure 1, la ou les poutre(s) avant (5) est(sont) avantageusement montée(s) rigidement en-dessous du châssis roulant porteur (2) entre les roues (10) de ce dernier et le timon d'attelage (4) destiné à relier ledit châssis (2) à un tracteur (3) ou analogue, au moins une trémie (9) renfermant les semis et/ou l'engrais étant également montée sur ledit châssis (2), préférentiellement sensiblement au-dessus de la ou des rangée(s) d'outils ouvreurs (6).

Ainsi, les outils semeurs (8) forment avec la poutre arrière (7), et éventuellement avec les roues de contrôle de profondeur (17), ainsi qu'avec les systèmes de fixation à structure en parallélogramme (21), un ensemble suiveur accroché au châssis roulant (2) par le parallélogramme (11), librement déformable ou à déformation contrôlée (présence d'un organe de verrouillage (14) actif, du type actionneur ou stabilisateur). Cet ensemble suiveur est tracté par le châssis roulant (2) en position abaissée de travail et transporté par celui-ci, en position relevée (soulèvement de la poutre arrière (7)).

La structure (11) présente une constitution suffisamment rigide et résistante pour le maintien de l'ensemble suiveur (7, 8, 17, 21) en position relevée de transport (relèvement au moyen d'un actionneur non représenté). Le relèvement de cet ensemble est, par exemple, obtenu, comme le montre implicitement la figure 4, par pivotement de la console (23) du châssis (2), sur laquelle sont fixés de manière articulée (articulations pivotantes) les bras (12, 13, 20) du parallélogramme (11), autour d'un axe (24) de solidarisation de cette console (23) avec ledit châssis (2).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1) comportant un châssis (2) roulant portant au moins une poutre avant (5) supportant des outils ouvreurs (6) et une poutre arrière (7) supportant des outils semeurs (8), semoir (1) dans lequel les outils semeurs (8) s'étendent derrière les outils ouvreurs (6), vus selon la direction d'avance (A), dans lequel à chaque outil ouvreur (6) est associé opérationnellement à un ou deux outil(s) semeur(s) (8) et dans lequel chaque outil ouvreur (6) comporte un dispositif pour la fertilisation,
semoir (1) **caractérisé en ce que** la poutre arrière (7) est liée au châssis roulant porteur (2) par l'intermédiaire d'une structure en parallélogramme (11) déformable transversalement à la direction d'avance (A), **en ce que** ce parallélogramme déformable (11) comporte au moins deux bras articulés (12, 13) et **en ce qu'**un élément de verrouillage (14) est prévu entre deux côtés consécutifs dudit parallélogramme déformable (11) pour verrouiller ledit parallélogramme (11) dans au moins deux configurations différentes, dont l'une au moins correspond à un positionnement mutuellement aligné entre les outils ouvreurs (6) et les outils semeurs (8) qui leur sont respectivement associés.

2. Semoir selon la revendication 1, **caractérisé en ce que** ladite au moins une poutre avant (5) et ladite poutre arrière (6) sont arrangées parallèlement entre elles et perpendiculairement à la direction d'avance (A) ou à un plan vertical médian (18) du châssis roulant porteur (2), et **en ce qu'**une déformation ou un changement de configuration du parallélogramme (11) entraîne un déplacement relatif entre les poutres avant et arrière (5 et 7) selon une direction transversale au plan (18) ou à la direction (A) précités, avec conservation du parallélisme entre lesdites poutres (5 et 7) et conservation de leur orientation perpendiculaire à la direction d'avance (A) et au plan vertical médian (18).

3. Semoir selon la revendication 1 ou 2, **caractérisé en ce que** lesdits au moins deux bras articulés (12, 13) sont disposés symétriquement de part et d'autre du plan vertical médian (18) du semoir (1), dans la configuration du parallélogramme déformable (11) correspondant à un alignement entre outils ouvreurs (6) et outils semeurs (8) correspondants.

4. Semoir selon l'une quelconque des revendications 1 à 3, **caractérisé en ce qu'**au moins deux desdits bras articulés (12, 13) s'étendent dans un même plan horizontal et sont avantageusement reliés au châssis roulant porteur (2) et à la poutre arrière (7) par des liaisons à pivot à axes perpendiculaires audit plan horizontal.

5. Semoir selon l'une quelconque des revendications 1 à 4, **caractérisé en ce que** l'élément de verrouillage (14) consiste en un organe du type stabilisateur, préférentiellement ajustable ou un actionneur analogue, apte et destiné à réaliser le réglage du déplacement latéral de la poutre arrière (7) par déformation du parallélogramme (11), ce avec faculté de verrouillage de la déformation du parallélogramme (11) dans une configuration donnée, prédéterminée ou non.

6. Semoir selon l'une quelconque des revendications 1 à 5, **caractérisé en ce qu'**il comporte un système de géolocalisation absolue ou relative, au moins de la poutre arrière (7), avec au moins une antenne (22, 22').

7. Semoir selon la revendication 6, **caractérisé en ce que** le système de géolocalisation comprend une première antenne (22) associée à la poutre arrière (7) et une seconde antenne (22') associée à l'une des poutres avant (5) ou au châssis roulant (2), l'information fournie par ledit système étant exploitée pour positionner ladite poutre arrière (7) latéralement par rapport à la ou une poutre avant (5), de manière continue ou non, par pilotage d'un actionneur (14) formant élément de verrouillage et qui est apte et destiné à contrôler la déformation du parallélogramme (11).

8. Semoir selon la revendication 6, **caractérisé en ce que** le système de géolocalisation comprend une unique antenne (22) fixée sur le châssis (2), sur la ou une poutre avant (5) ou encore sur la poutre arrière (7) et **en ce que** le semoir (1) comprend également un moyen de mesure de la déformation du parallélogramme (11), par le biais d'une mesure angulaire au niveau de l'une des liaisons articulées de l'un des bras (12, 13) ou d'une mesure de longueur au niveau d'un actionneur linéaire (14) formant organe de verrouillage et qui est apte et destiné à contrôler la déformation dudit parallélogramme (11).

9. Semoir selon l'une quelconque des revendications 1 à 8, **caractérisé en ce qu'**il comporte également une articulation centrale (19) d'axe sensiblement vertical qui s'étend dans un plan vertical médian (18) du châssis roulant porteur (2) du semoir (1), **en ce qu'**une bielle centrale (20) est liée à cette articulation centrale (19) et reliée, de manière articulée, à la poutre arrière (7), et **en ce que** la bielle centrale (20) est parallèle à l'un au moins des deux bras articulés (12, 13) du parallélogramme déformable (11).

10. Semoir selon la revendication 9, **caractérisé en ce que** l'un des bras articulés (12 ; 13) forme un premier parallélogramme élémentaire avec la bielle centrale (20) et que l'autre bras articulé (13 ; 12) forme un deuxième parallélogramme élémentaire avec la bielle centrale (20).

11. Semoir selon l'une quelconque des revendications 1 à 10, **caractérisé en ce qu'**à chaque outil ouvreur (6) correspondent deux outils semeurs (8), décalés latéralement l'un par rapport à l'autre, une disposition des bras articulés (12, 13) parallèlement à la direction d'avance (A) ou au plan médian (18) correspondant à un alignement de chaque outil ouvreur (6) à mi-distance entre deux outils semeurs (8) qui lui sont associés.

12. Semoir selon l'une quelconque des revendications 1 à 11, **caractérisé en ce que** les outils ouvreurs (6), vus selon une direction perpendiculaire à la direction d'avance (A) ou au plan médian (18), sont arrangés alternativement sur deux rangées, décalées l'une par rapport à l'autre dans la direction d'avance (A), les outils ouvreurs (6) étant préférentiellement montés chacun sur une poutre avant (5) propre.

13. Semoir selon l'une quelconque des revendications 1 à 12, **caractérisé en ce que** les outils semeurs (8), vus selon une direction perpendiculaire à la direction d'avance (A) ou au plan médian (18), sont arrangés alternativement sur deux rangées, décalées l'une par rapport à l'autre dans la direction d'avance (A), lesdits outils semeurs (8) étant préférentiellement montés sur une même poutre arrière (7).

14. Semoir selon l'une quelconque des revendications 1 à 13, **caractérisé en ce que** les outils semeurs (8) comprennent chacun un moyen (17) de contrôle de la profondeur du sillon creusé, par exemple sous la forme d'une roue suiveuse, et **en ce que** lesdits outils semeurs (8) sont chacun fixés sur la poutre arrière (7), ensemble avec le moyen (17) de contrôle de profondeur respectivement associé, par l'intermédiaire d'un système librement déformable à structure en parallélogramme (21).

15. Semoir selon l'une quelconque des revendications 1 à 14, **caractérisé en ce que** la ou les poutre(s) avant (5) est(sont) montée(s) rigidement en-dessous du châssis roulant porteur (2) entre les roues (10) de ce dernier et le timon d'attelage (4) destiné à relier ledit châssis (2) à un tracteur (3) ou analogue, au moins une trémie (9) renfermant les semis et/ou l'engrais étant également montée sur ledit châssis (2), préférentiellement sensiblement au-dessus de la ou des rangée(s) d'outils ouvreurs (6).
